(19) Europäisches Patentamt
European Patent Office
Office européen des brevets

(11) Veröffentlichungsnummer : **0 484 356 B1**

(12) # EUROPÄISCHE PATENTSCHRIFT

(45) Veröffentlichungstag der Patentschrift :
**15.06.94 Patentblatt 94/24**

(51) Int. Cl.$^5$ : **C09D 133/00,** C09D 163/00

(21) Anmeldenummer : **90910665.0**

(22) Anmeldetag : **18.07.90**

(86) Internationale Anmeldenummer :
**PCT/EP90/01173**

(87) Internationale Veröffentlichungsnummer :
**WO 91/02036 21.02.91 Gazette 91/05**

(54) **ÜBERZUGSMITTEL AUF DER BASIS VON CARBOXYLGRUPPENHALTIGEN POLYMEREN UND EPOXIDGRUPPENHALTIGEN VERNETZERN, VERFAHREN ZUR HERSTELLUNG DES ÜBERZUGSMITTELS SOWIE SEINE VERWENDUNG.**

(30) Priorität : **26.07.89 DE 3924618**

(43) Veröffentlichungstag der Anmeldung :
**13.05.92 Patentblatt 92/20**

(45) Bekanntmachung des Hinweises auf die Patenterteilung :
**15.06.94 Patentblatt 94/24**

(84) Benannte Vertragsstaaten :
**AT BE CH DE DK ES FR GB IT LI NL SE**

(56) Entgegenhaltungen :
**EP-A- 0 286 904**
**WO-A-89/08132**
**US-A- 4 128 521**
**US-A- 4 190 569**

(73) Patentinhaber : **BASF Lacke + Farben AG**
**Glasuritstrasse 1**
**D-48165 Münster-Hiltrup (DE)**

(72) Erfinder : **HOFFMANN, Peter, Dr.**
**Erlengrund 215**
**D-4403 Senden (DE)**
Erfinder : **JUNG, Werner Alfons, Dr.**
**Uhrwerkerstrasse 82**
**D-4715 Ascheberg (DE)**
Erfinder : **KAPPES, Elisabeth, Dr.**
**Meerfeldstrasse 82**
**D-6800 Mannheim 1 (DE)**
Erfinder : **NIESSNER, Manfred, Dr.**
**Budapesterstrasse 51**
**D-6700 Ludwigshafen (DE)**

(74) Vertreter : **Münch, Volker, Dr. et al**
**BASF Lacke + Farben AG**
**Patente/Lizenzen/Dokumentation**
**Postfach 61 23**
**D-48136 Münster (DE)**

EP 0 484 356 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Überzugsmittel, enthaltend

A) ein oder mehrere carboxylgruppenhaltige Copolymerisate und/oder einen oder mehrere carboxylgruppenhaltige Polyester mit einem zahlenmittleren Molekulargewicht $M_n$ von 500 - 8000 und einer Säurezahl von 15 bis 200 mg KOH/g als wesentliche Bindemittelkomponente,

B) ein oder mehrere epoxidgruppenhaltige Verbindungen als Vernetzungsmittel.

Überzugsmittel, die carboxylgruppenhaltige Polymere als Bindemittel und epoxidgruppenhaltige Verbindungen als Vernetzer enthalten, sind bekannt und beispielsweise in der internationalen PCT-Veröffentlichung WO 87/02041, EP-A-103 199, EP-B-51275, EP-A-123 793, DE-AS 26 35 177, JP-OS 219267/83, JP-OS 76338/77 und JP-OS 53145/79 beschrieben.

Sollen diese Überzugsmittel auf der Basis von carboxylgruppenhaltigen Polymeren und Epoxidverbindungen bei niedrigen Temperaturen (d.h. ≦ 80°C) ausgehärtet werden, erfordert dies den Einsatz von hoch reaktiven Epoxidverbindungen. Derartige Epoxidverbindungen auf der Basis aliphatischer Epoxide haben sich zumeist aber im Ames-Test als mutagen erwiesen. Dies ist zum einen auf hohe Anteile oligomerer Bestandteile, zum anderen aber auch auf das Herstellverfahren, nämlich der Umsetzung mit Epichlorhydrin und dem damit verbundenen Restgehalt an Epichlorhydrin zurückzuführen. Toxikologisch weniger bedenkliche Epoxidverbindungen sind zumeist sehr hochmolekular und damit weniger reaktiv oder sie sind auf Bisphenol A- oder Bisphenol-F-Basis aufgebaut und wegen ihrer Vergilbungsneigung nicht für den Einsatz als Deck- und Klarlack geeignet. Nach den herkömmlichen Methoden hergestellte epoxidgruppenhaltige Acrylatcopolymerisate schließlich sind ebenfalls aus toxikologischen Gründen aufgrund ihres hohen Restmonomerengehaltes ungeeignet.

Nachteilig bei den bekannten Überzugsmitteln auf Basis von carboxylgruppenhaltigen Polymeren und Epoxy-Vernetzern ist außerdem häufig die hohe Viskosität der Überzugsmittel und somit der nur geringe Festkörpergehalt der Überzugsmittel bei einer für die Verarbeitung günstigen Viskosität. Dies führt zu einer hohen Lösemittelbelastung der Umgebung beim Trocknen der Lackfilme.

Aus der DE-PS 27 28 459 sind nun lösemittelarme Einbrennlacke bekannt, die aus carboxylgruppenhaltigem Acrylatharz, Epoxidharz mit mindestens 2 Oxirangruppen pro Molekül, Lösungsmittel sowie ggf. Pigment, Katalysator und anderen Hilfsmitteln bestehen. Das als Bindemittel eingesetzte carboxylgruppenhaltige Acrylatharz wird mittels radikalischer Polymerisation unter Drücken von 1,5 bis 30 bar bei Temperaturen von 160 bis 280° C in Substanz hergestellt und zeichnet sich durch eine geringe, gelpermeationschromatographisch gemessene Uneinheitlichkeit zwischen 1,5 und 2,0 und ein zahlenmittleres Molekulargewicht von 1500 bis 3000 aus. Da aber als Vernetzer die üblicherweise eingesetzten Epoxidverbindungen auf Basis von Bisphenol A bzw. unter Verwendung von Epichlorhydrin hergestellten Verbindungen bzw. epoxidgruppenhaltige Acrylatcopolymerisate eingesetzt werden, weisen auch diese Einbrennlacke die oben aufgeführten, durch diese Vernetzer bedingten Nachteile, wie Vergilbungsneigung und/oder Toxizität auf.

Die Herstellung von Acrylatcopolymerisaten mit funktionellen Gruppen, wie z.B. Hydroxyl-, Carboxyl-, Epoxid-, Isocyanat- oder Aminogruppen, die nur eine geringe Dispersität, ein niedriges zahlenmittleres Molekulargewicht von 500 bis 6000 und eine geringe Viskosität der resultieren- den Lösungen der Acrylatcopolymerisate aufweisen, ist auch aus der EP-A-96 901 bekannt. Die Acrylatcopolymerisate werden mittels eines kontinuierlichen Massenpolymerisationsverfahren, ggf. unter Druck bei Polymerisationstemperaturen zwischen 180 und 270°C hergestellt.

Außerdem sind in der EP-A-96 901 Überzugsmittel beschrieben, die nach dem Verfahren der EP-A-96 901 hergestellte hydroxylgruppenhaltige Acrylatcopolymerisate als Bindemittel und Harnstoff- , Melamin- oder Benzoguanaminharze sowie Polyisocyanate oder Polyepoxide als Vernetzer enthalten.

Der vorliegenden Erfindung lag somit die Aufgabe zugrunde, Überzugsmittel auf der Basis von carboxylgruppenhaltigen Polymeren als Vernetzer zur Verfügung zu stellen, die bei so niedrigen Temperaturen (ca. ≦ 80°C) aushärtbar sind, daß sie für die Autoreparaturlackierung geeignet sind. Außerdem sollten die Überzugsmittel möglichst lösemittelarm sein, d.h. daß sie bei der für die Verarbeitung günstigen Viskosität von 16 bis 20 s, gemessen im Auslaufbecher nach DIN 4 bei 23°C, einen möglichst hohen Festkörpergehalt aufweisen sollten. Die Überzugsmittel sollten außerdem toxikologisch möglichst unbedenklich sein, d.h. insbesondere einen möglichst niedrigen Restmonomerengehalt aufweisen und sowohl als Grundierung als auch als Deck- und/oder Klarlack einsetzbar sein, d.h. sie sollten zu Beschichtungen führen, die nur eine geringe bzw. gar keine Vergilbungsneigung besitzen. Schließlich sollten die Überzugsmittel einen guten Verlauf und eine geringe Ablaufneigung auch an senkrechten Flächen zeigen und zu Beschichtungen mit gutem Glanz, hoher Härte, bei guter Flexibilität und guter Chemikalienbeständigkeit führen.

Diese Aufgabe wird überraschenderweise gelöst durch ein Überzugsmittel, enthaltend

A) ein oder mehrere carboxylgruppenhaltige Copolymerisate und/oder einen oder mehrere carboxylgruppenhaltige Polyester mit einem zahlenmittleren Molekulargewicht $M_n$ von 500 - 8000 und einer Säurezahl von 15 bis 200 mg KOH/g als wesentliche Bindemittelkomponente und

B) ein oder mehrere epoxidgruppenhaltige Verbindungen als Vernetzungsmittel.

Das Überzugsmittel ist dadurch gekennzeichnet, daß die epoxidgruppenhaltige Verbindung B ein epoxidgruppenhaltiges Copolymerisat ist, ein zahlenmittleres Molekulargewicht $M_n$ von 300 bis 5000, bevorzugt 500 bis 3500 und eine gelpermeationschromatographisch gemessene Uneinheitlichkeit ($M_w/M_n$) von $\leqq$ 3, bevorzugt von $\leqq$ 2 aufweist und hergestellt worden ist durch kontinuierliche Massenpolymerisation bei Temperaturen zwischen 130 und 350°C und Drucken oberhalb 1 bar von

a) 10 bis 60 Gew.-%, bevorzugt 15 bis 50 Gew.-%, eines oder mehrerer vinylaromatischer Kohlenwasserstoffe,

b) 10 bis 50 Gew.-%, bevorzugt 15 bis 30 Gew.-%, eines oder mehrerer ethylenisch ungesättigter Monomerer mit mindestens einer Epoxidgruppe pro Molekül und

c) 5 bis 80 Gew.-%, bevorzugt 20 bis 50 Gew.-%, anderer ethylenisch ungesättigter copolymerisierbarer Monomerer,

wobei die Summe der Gewichtsanteile der Komponenten a bis c jeweils 100 Gew.-% beträgt.

Gegenstand der vorliegenden Erfindung ist außerdem auch ein Verfahren zur Herstellung der Überzugsmittel sowie die Verwendung die Überzugsmittel in der Autoreparaturlackierung als Grundierung, Decklack oder Klarlack.

Es ist überraschend und war nicht vorhersehbar, daß die erfindungsgemäßen Überzugsmittel mit hohen Festkörpern von bis zu 80 Gew. -% bei Spritzviskosität von 16 bis 20 s, gemessen im Auslaufbecher nach DIN 4 bei 23°C, verarbeitbar sind, toxikologisch weniger bedenklich als herkömmliche vergleichbare Überzugsmittel sind, einen guten Verlauf und geringe Ablaufneigung auch an Senkrechten zeigen sowie zu Beschichtungen führen, die bei niedrigen Temperaturen ($\leqq$ 80°C) aushärtbar sind und guten Glanz, hohe Härte bei guter Elastizität sowie gute Chemikalienbeständigkeit zeigen.

Im folgenden werden nun zunächst die Herstellung der als Vernetzer B eingesetzten epoxidgruppenhaltigen Verbindungen und anschließend die Herstellung der als Bindemittel A eingesetzten carboxylgruppenhaltigen Polymeren sowie die Herstellung der Überzugsmittel unter Verwendung der Komponenten A und B näher erläutert.

Die in den erfindungsgemäßen Überzugsmitteln als Vernetzer eingesetzten epoxidgruppenhaltigen Verbindungen werden mittels kontinuierlicher Massenpolymerisation bei Temperaturen zwischen 130 und 350°C und Drucken oberhalb 1 bar, in der Regel bei Drucken zwischen 2 und 200 bar, bevorzugt bei Drucken zwischen 5 und 120 bar hergestellt. Das kontinuierliche Massenpolymerisationsverfahren ist an sich be-kannt und beispielsweise in der EP-A-96 901 beschrieben. Das Polymerisationsverfahren wird daher nur kurz erläutert und zwecks näherer Einzeleinheiten wird auf die EP-A-96 901 verwiesen.

Die Herstellung der erfindungsgemäß eingesetzten epoxidgruppenhaltigen Copolymerisate erfolgt in Druckapparaturen wie beispielsweise Druckkesseln, Druckkesselkaskaden, Druckrohren mit und ohne Mischelementen oder auch in Druckkesseln in Kombination mit Druckrohren. Die Druckkessel können mit unterschiedlichen Mischaggregaten, wie Rührer oder Mischkreis mit Umwälzpumpe, versehen sein. Außerdem sind die Druckapparaturen noch mit Vorrichtungen zur Regelung der Temperatur des Reaktorinhalts, wie z.B. internen Kühl-bzw. Heizschlangen oder Kühl- bzw.

Heizummantelung, ausgestattet. Je nach Monomerenzusammensetzung und je nach Einsatzmenge an Monomeren pro Zeiteinheit kann die bei der Polymerisation freiwerdende Wärme-menge die für die Polymerisation erforderliche Temperatur aufrechterhalten oder aber es ist erforderlich, die Reaktionszone zu beheizen oder zu kühlen.

Zur Durchführung der Polymerisationsreaktion werden die verschiedenen Monomeren entweder vor dem Einbringen in den Polymerisationsreaktor gemischt und dann die Mischung in den Reaktor dosiert oder aber die verschiedenen Monomeren werden einzeln dem Reaktor mit Hilfe von Pumpen im gewünschten Verhältnis zudosiert. Die Copolymerisation wird dann in Polymerisationsreaktoren mit geringem Inhalt durchgeführt, so daß bereits kurz nach dem Beginn der Polymerisation ein stabiler Zustand erreicht wird. Auf diese Weise ist es auch möglich, eine problemlose und rasche Umstellung von einem Copolymerisattyp auf den anderen vorzunehmen.

Die Verweilzeit der Reaktionsmischung in den Polymerisationsapparaturen beträgt 2 bis 60 Minuten. Bevorzugt wird jedoch eine mittlere Verweilzeit - definiert als Reaktorvolumen, geteilt durch Volumen der je Zeiteinheit zugeführten Monomerenmischung - von 10 bis 40 Minuten eingehalten.

Eine bevorzugte Ausführungsform des Massenpolymerisationsverfahrens besteht darin, während der Polymerisation periodische Druckschwankungen im Polymerisationsreaktor zu erzeugen, wie dies z.B. in der DE-OS-30 26 831 beschrieben ist. Die periodischen Druckschwankungen mit einer Druckdifferenz von 15 bis 100 bar mit einer Frequenz der Druckschwankungen von 6 bis 300 pro Stunde werden erzeugt, indem man beispielsweise periodisch ein Inertgas aufpreßt und danach für eine Entspannung sorgt bzw. mit Hilfe üblicher Vorrichtungen, indem z.B. die Druckhaltung programmgesteuert geregelt wird. Der Programmsteuerung kann beispielsweise eine Sinusschwingung oder eine Sägezahnschwingung mit Amplituden in den angegebenen Druckgrenzen und Frequenzen von 6 bis 300 Schwingungen pro Stunde zugrunde liegen.

Aufgrund der periodischen Druckschwankungen in der Polymerisationsapparatur kommt es darin auch zu einer pulsierenden Strömung des Reaktionsgemisches. Das entstehende Polymerisat besitzt dadurch ein unterschiedliches Verweilzeit- spektrum, was wiederum eine breitere chemische und physikalische Einheitlichkeit als bei nichtpulsierender Fahrweise zur Folge hat. Durch die pulsierende Strömung innerhalb der Polymerisationsapparatur wird außerdem ein Anbacken und eine thermische Schädigung des Copolymerisats im Reaktor vermieden.

Die Massenpolymerisationsreaktion kann sowohl ohne Initiatoren als auch in Gegenwart von 0,01 bis 5 Gew.-%, bezogen auf das Gewicht an eingesetzten Monomeren, eines geeigneten Initiators durchgeführt werden. Geeignete radikalische Initiatoren sind organische Peroxide, wie z.B. Dibenzoylperoxid, Dicumylperoxid, Cumolhydroperoxid, Di-tert.-butylperoxid, tert.-Butylamylperoxid, tert.-Butylhydroperoxid, 2,2-Di-tert.-butylperoxybutan, tert.-Amylperbenzoat, 1,3-Bis(tert.-butylperoxiisopropyl)-benzol, Diisopropylbenzolmonohydroperoxid und Diacylperoxide, wie z.B. Diacetylperoxid, Peroxiketal, wie z.B. 2,2-Di(tert.-amylperoxi)-propan und Ethyl-3,3-di-(tert.-amylperoxi)-butyrat, thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azobiscyclohexannitril, eingesetzt werden.

Vorteilhafterweise wird die Polymerisationsreaktion ohne Polymerisationsregler durchgeführt. Das Molekulargewicht der hergestellten epoxidgruppenhaltigen Copolymerisate wird vielmehr einerseits über die Polymerisationstemperatur und andererseits über die zugesetzte Menge von Monomeren mit mindestens 2 ethylenisch ungesättigten Doppelbindungen gesteuert.

Bevorzugt wird die Polymerisation in Abwesenheit von Lösungsmitel durchgeführt. Es ist allerdings auch möglich, kleine Mengen (bis zu 20 Gew. -%, bezogen auf die Monomermischung) Lösungsmittel zuzugeben, um so die Polymerisation zu steuern. Hierfür geeignet sind insbesondere Lösungsmittel, die mit mindestens einem der Monomeren reagieren, wie z.B. Ethylenglykol, Propylenglykol u.a.Die nach dem Massenpolymerisationsverfahren hergestellten epoxidgruppenhaltigen Copolymerisate B weisen zahlenmittlere Molekulargewichte $M_n$ zwischen 300 und 5000, bevorzugt zwischen 500 und 3500 und eine gelpermeationschromatographisch gemessene Uneinheitlichkeit (gewichtmittleres Molekulargewicht $M_w$/zahlenmittlerem Molekulargewicht $M_n$) von < 3, bevorzugt < 2 auf. Die Messung der Uneinheitlichkeit erfolgt dabei nach allgemein bekannten Methoden (vgl. z.B. B. Vollmert, Grundriß der makromolekularen Chemie, E. Vollmert-Verlag, Karlsruhe 1982, Band III, Seite 72 ff) gegen Polystyrol-Standard.

Diese epoxidgruppenhaltigen Copolymerisate B werden hergestellt durch Copolymerisation von

a) 10 bis 60 Gew.-%, bevorzugt 15 bis 50 Gew.-%, eines oder mehrerer vinylaromatischer Kohlenwasserstoffe,
b) 10 bis 50 Gew.-%, bevorzugt 15 bis 30 Gew.-%, eines oder mehrerer ethylenisch ungesättigter Monomerer mit mindestens einer Epoxidgruppe pro Molekül und
c) 5 bis 80 Gew.-%, bevorzugt 20 bis 50 Gew.-%, anderer ethylenisch ungesättigter copolymerisierbarer Monomerer,

wobei die Summe der Gewichtsanteile der Komponenten a bis c jeweils 100 Gew.-% beträgt.

Die Komponente a ist eine monovinylaromatische Verbindung. Vorzugsweise enthält sie 8 bis 9 Kohlenstoffatome je Molekül. Beispiele für geeignete Verbindungen sind Styrol, Vinyltoluole, α-Methylstyrol, Chlorstyrole, o-,m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Beispiele für Monomere mit mindestens einer Epoxidgruppe pro Molekül (Komponente b) sind Glycidylacrylat, Glycidylmethacrylat, Allylglycidylether, Glycidylcrotonoat, Glycidyl-α-ethylacrylat und Crotonylglycidylether. Bevorzugt eingesetzt werden Glycidylmethacrylat und/oder Glycidylacrylat.

Als Komponente c geeignet sind insbesondere Alkylester der Acryl- und Methacrylsäure, wie z.B. Methyl-(meth)acrylat, Ethyl(meth)acrylat, Propyl(meth)acrylat, Butyl(meth)acrylat, Isopropyl(meth)acrylat, Isobutyl-(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat.

Bevorzugt zusammen mit diesen Alkylestern der Acryl- und Methacrylsäure, aber auch ausschließlich als Komponente c, können weitere ethylenisch ungesättigte Monomere eingesetzt werden, wobei sich die Auswahl dieser Monomeren weitgehend nach den gewünschten Eigenschaften der Überzugsmittel in bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. die entsprechenden Methyl-, Ethyl-, Propyl-, Butyl-, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren. Beispiele für geeignete Verbindungen sind die auf den Seiten 23 bis 24 dieser Beschreibung aufgeführten Verbindungen.

Die so erhaltenen epoxidgruppenhaltigen Copolymerisate weisen im allgemeinen Epoxidäquivalentgewichte von 150 bis 2000, bevorzugt 500 bis 1000, auf.

Bevorzugt werden direkt im Anschluß an die Nassenpolymerisationsreaktion die ggf. noch vorhandenen geringen Mengen an Monomeren - beispielsweise destillativ - aus dem Polymerisat entfernt. Im Gegensatz zur Herstellung von Copolymeren mittels Lösungspolymerisation gelingt dies wegen des Fehlens von Lösungsmittel bei den nach dem Massenpolymerisationsverfahren hergestellten Copolymerisaten recht problemlos.

Zur Herstellung der erfindungsgemäßen Überzugsmittel werden die epoxidgruppenhaltigen Copolymerisate üblicherweise in einem oder mehreren organischen Lösungsmitteln gelöst. Diese Vernetzerlösung wird dann erst unmittelbar vor der Applikation der Überzugsmittel mit der Bindemittellösung gemischt.

Zur Lösung der epoxidgruppenhaltigen Copolymerisate geeignete Lösungsmittel sind beispielsweise höher substituierte Aromaten, wie z.B. Solvent Naphta®, Schwerbenzol, verschiedene solvesso®-Typen, verschiedene Shellsol®-Typen und Deasol, höhersiedende aliphatische und cycloaliphatische Kohlenwasserstoffe, wie z.B. verschiedene Testbenzine, Mineralterpentinöl, Tetralin und Dekalin sowie Ester, wie z.B. Butylacetat, Pentylacetat, Ethoxyethylpropionat und 1-Methoxipropylacetat-2. Selbstverständlich können auch Mischungen verschiedener Lösungsmittel eingesetzt werden.

Die erfindungsgemäßen Überzugsmittel enthalten als wesentliche Bindemittelkomponente ein oder mehrere carboxylgruppenhaltige Polymere mit einem zahlenmittleren Molekulargewicht $M_n$ von 500 und 8000 und einer Säurezahl von 15 bis 200 mg KOH/g, bevorzugt 30 bis 120 mg KOH/g. Die Carboxylgruppen können dabei direkt durch Verwendung carboxylgruppenhaltiger Bausteine beim Aufbau der Polymeren eingeführt werden. Es ist aber auch möglich, zunächst ein hydroxyl- und ggf. carboxylgruppenhaltiges Polymer mit einer OH-Zahl von 15 bis 200 mg KOH/g aufzubauen und die Carboxylgruppen ganz oder teilweise in einer zweiten Stufe durch Umsetzen der hydroxyl- und ggf. carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Die Umsetzung der hydroxylgruppenhaltigen Polymeren mit den Carbonsäureanhydriden erfolgt bei Temperaturen von 50 bis 140°C in Gegenwart eines Katalysators, wie beispielsweise tertiären Aminen.

Bei den carboxylgruppenhaltigen Polymeren handelt es sich um carboxylgruppenhaltige Copolymerisate und/oder carboxylgruppenhaltige Polyester. Die carboxylgruppenhaltigen Polyester können nach den üblichen Methoden (vgl. z.B. B. Vollmert, Grundriß der makromolekularen Chemie, E. Vollmert-Verlag Karlsruhe 1982, Band II, Seite 5 ff)aufgebaut werden aus aliphatischen und/oder cycloaliphatischen Di-, Tri- oder höherwertigen Alkoholen, ggf. zusammen mit einwertigen Alkoholen und aus aliphatischen und/oder cycloaliphatischen Carbonsäuren sowie höherwertigen Polycarbonsäuren.

Beispiele für geeignete Alkohole sind Ethylenglykol, 1,2- Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylolethan, Trimethylolpropan, Pentaerythrit, Veretherungsprodukte von Diolen und Polyolen, z.B. Di- und Triethylenglykol, Polyethylenglykol, Neopentylglykolester von Hydroxipivalinsäure.

Beispiele für geeignete Carbonsäuren sind Adipin-, Azelain-, Tetrahydrophthal-, Hexahydrophthal-, Endomethylentetrahydrophthalsäure sowie deren veresterungsfähige Derivate.

Die in den erfindungsgemäßen Überzugsmitteln eingesetzten carboxylgruppenhaltigen Polyester können ggf. tertiäre Aminogruppen enthalten. Diese tertären Aminogruppen können auf verschiedenste Weise in das Polymer eingeführt werden. Zum einen können tertiäre Aminogruppen enthaltende Carbonsäuren und/oder Alkohole beim Aufbau der Polyester eingesetzt werden, zum anderen können die tertiären Aminogruppen auch in einer zweiten Stufe eingeführt werden.

Dies kann beispielsweise durch Umsetzung von hydroxylgruppenhaltigen Polymeren mit Carbonsäuren, die eine tertiäre Aminogruppe enthalten oder mit Verbindungen, die pro Molekül durchschnittlich 0,8 bis 1,5, vorzugsweise eine, freie Isocyanatgruppe und mindestens eine tertiäre Aminogruppe enthalten, erfolgen. Außerdem können auch die carboxylgruppenhaltigen Polymeren mit Verbindungen umgesetzt werden, die außer einer tertiären Aminogruppe noch eine Alkohol-, Thiol- oder primäre oder sekundäre Aminogruppe enthalten. Diese verschiedenen Verfahren zur Einführung von tertiären Aminogruppen sind aber ausführlich auf den Seiten 18 bis 20 dieser Beschreibung erläutert, so daß hier nur bezüglich näherer Einzelheiten auf diese Seiten verwiesen wird.

Bevorzugt werden als carboxylgruppenhaltige Polymere aber carboxylgruppenhaltige Acrylatcopolymerisate, ggf. in Kombination mit den carboxylgruppenhaltigen Polyestern, eingesetzt. Geeignete carboxylgruppenhaltige Copolymerisate können sowohl mit Hilfe der radikalischen Lösungspolymerisation als auch mittels kontinuierlicher Massenpolymerisation hergestellt werden.

Geeignete carboxylgruppenhaltige Polymere A sind daher beispielsweise Copolymerisate, die durch kontinuierliche Massenpolymerisation bei Temperaturen zwischen 130 und 350°C bei Drucken oberhalb von 1 bar, in der Regel bei Drucken zwischen 2 und 200 bar, bevorzugt bei Drucken zwischen 5 und 120 bar hergestellt worden sind. Das Massenpolymerisationsverfahren läuft analog zu dem Massenpolymerisationsverfahren zur Herstellung der epoxidgruppenhaltigen Copolymeren B ab, so daß hïer auf eine nähere Beschreibung des Verfahrens verzichtet wird und nur auf die Seiten 5 bis 8 der vorliegenden Beschreibung verwiesen wird. Die mittels Massenpolymerisation hergestellten carboxylgruppenhaltigen Copolymerisate weisen eine gelpermeationschromatographisch bestimmte Uneinheitlichkeit ($M_w/M_n$) von ≦ 3,5, bevorzugt ≦ 2 und einen K-Wert (nach Fikentscher) unter 20, bevorzugt unter 15 sowie Säurezahlen von 15 bis 200 mg KOH/g, bevorzugt 30 bis 120 mg KOH/g und Aminzahlen von 0 bis 50 mg KOH/g, bevorzugt 10 bis 40 mg KOH/g auf.

Die Copolymerisate A werden hergestellt durch Massenpolymerisation von

$m_1$) 1 bis 30 Gew.-%, bevorzugt 10 bis 25 Gew.-%, eines oder mehrerer carboxylgruppenhaltiger, ethylenisch ungesättigter Monomerer

$m_2$) 0 bis 50 Gew.-%, bevorzugt 10 bis 30 Gew.-%, eines oder mehrerer Alkylester der Acryl- und/oder Methacrylsäure,

$m_3$) 5 bis 80 Gew.-%, bevorzugt 10 bis 50 Gew.-%, eines oder mehrerer vinylaromatischer Kohlenwasserstoffe,

$m_4$) 0 bis 40 Gew.-%, bevorzugt 5 bis 25 Gew.-%, eines oder mehrerer Hydroxialkylester, α,β-ungesättigter Carbonsäuren und

$m_5$) 0 bis 70 Gew.-%, anderer ethylenisch ungesättigter, copolymerisierbarer Monomerer,

wobei die Summe der Gewichtsanteile der Komponenten $m_1$ bis $m_5$ stets 100 Gew.-% beträgt.

Selbstverständlich können die Carboxylgruppen - wie bereits auf Seite 11 dieser Beschreibung erläutert - auch ganz oder teilweise durch Umsetzung eines hydroxylgruppenhaltigen Copolymerisates mit Carbonsäureanhydriden eingeführt werden.
Beispiele für geeignete carboxylgruppenhaltige Monomere $m_1$ sind ungesättigte Carbonsäuren, wie z.B. Acryl-, Methacryl-, Itacon-, Croton-, Isocroton-, Aconit-, Malein-und Fumarsäure, Halbester der Malein- und Fumarsäure sowie β-Carboxiethylacrylat und Addukte von Hydroxialkylestern der Acrylsäure und/oder Methacrylsäure mit Carbonsäurean- hydriden, wie z.B. der Phthalsäure-mono-2-methacryloyloxiethylester.

Beispiele für geeignete Alkylester der Acryl- und Methacrylsäure (Komponente $m_2$) sind die bereits auf Seite 9 dieser Beschreibung als geeignete Komponente c aufgeführten Verbindungen.
Als Komponente $m_3$ geeignete vinylaromatische Verbindungen sind die bereits auf Seite 8 dieser Beschreibung als Komponente a aufgeführten Verbindungen.

Als Komponente $m_4$ kommen Hydroxyialkylester α,β-ungesät- tigter Carbonsäuren mit primären oder sekundären Hydroxylgruppen in Frage. Vorwiegend werden Hydroxialkylester mit primären Hydroxylgruppen eingesetzt, da sie in der polymeranalogen Reaktion mit dem Carbonsäureanhydrid eine höhere Reaktivität aufweisen. Selbstverständlich können auch Mischungen von Hydroxialkylestern mit primären Hydroxylgruppen und Hydroxialkylester mit sekundären Hydroxylgruppen verwendet werden, beispielsweise, wenn man Hydroxylgruppen im carboxylgruppenhaltigen Copolymer benötigt, z.B. für die Einstellung der Verträglichkeit des carboxylgruppenhaltigen Copolymers.

Beispiele für geeignete Hydroxialkylester α,β-ungesättig- ter Carbonsäuren mit primären Hydroxylgruppen sind Hydroxiethylacrylat, Hydroxipropylacrylat, Hydroxibutylacrylat, Hydroxiamylacrylat, Hydroxihexylacrylat, Hydroxioctylacrylat und die entsprechenden Methacrylate. Als Beispiele für verwendbare Hydroxialkylester mit einer sekundären Hydroxylgruppe seien 2-Hydroxipropylacrylat, 2-Hydroxibutylacrylat, 3-Hydroxibutylacrylat und die entsprechenden Methacrylate genannt.

Selbstverständlich können jeweils auch die entsprechenden Ester anderer, α,β-ungesättigter Carbonsäuren, wie z.B. der Crotonsäure und der Isocrotonsäure eingesetzt werden.

Vorteilhafterweise kann die Komponente $m_4$ zumindest teilweise ein Umsetzungsprodukt aus einem Mol Hydroxiethylacrylat und/oder Hydroxiethylmethacrylat und durchschnittlich zwei Mol -Caprolacton sein.

Als Komponente $m_4$ kann zumindest teilweise auch ein Umsetzungsprodukt aus Acrylsäure und/oder Methacrylsäure mit dem Glycidylester einer Carbonsäure mit einem tertiären $\alpha$-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären $\alpha$-Kohlenstoffatom kann vor, während oder nach der Polymerisationsreaktion erfolgen.

Die Auswahl der anderen, ethylenisch ungesättigten Monomeren $m_5$ ist nicht besonders kritisch. Es ist aber darauf zu achten, daß der Einbau dieser Monomeren nicht zu unerwünschten Eigenschaften des Copolymerisats führt. So richtet sich die Auswahl der Komponenten $m_5$ weitgehend nach den gewünschten Eigenschaften der härtbaren Zusammensetzung in bezug auf Elastizität, Härte, Verträglichkeit und Polarität.

Geeignet als Komponente $m_5$ sind beispielsweise Alkoxiethylacrylate, Aryloxiethylacrylate und die entsprechenden Methacrylate, wie z.B. Butoxiethyl(meth)acrylat, Phenoxiethyl(meth)acrylat, ungesättigte Verbindungen mit tertiären Aminogruppen, wie z.B. N,N'Diethylaminoethylmethacrylat, 2-Vinylpyridin, 4-Vinylpyridin, Vinylpyrrolin, Vinylchinolin, Vinylisochinolin, N.N'-Dimethylaminoethylvinylether und 2-Methyl-5-vinylpyridin; Verbindungen, wie z.B. Acrylnitril, Methacrylnitril, Acrolein und Methacrolein.

Weiterhin können als Komponente $m_5$, ggf. zusammen mit anderen der gerade aufgeführten Monomeren, auch Monomere mit mindestens zwei polymerisierbaren Doppelbindungen eingesetzt werden. Beispiele für geeignete Verbindungen sind die auf den Seiten 23 und 24 dieser Beschreibung aufgeführten Verbindungen. Diese Monomeren mit mindestens 2 Doppelbindungen werden in kleinen Anteilen, bevorzugt in einer Menge bis zu 5 Gew.-%, bezogen auf das Gesamtgewicht der Monomeren, eingesetzt.

Besonders vorteilhaft ist es, wenn in das carboxylgruppenhaltige Copolymer tertiäre Aminogruppen eingebaut werden, da sie eine nachfolgende Vernetzung des Carboxylgruppen enthaltenden Polymerisats mit Epoxidgruppen katalysieren und so die Einbrenntemperaturen von Beschichtungsmitteln auf Basis dieser Polymerisate erniedrigt werden.

Enthält das Copolymerisat tertiäre Aminogruppen, muß bei der Addition von ungesättigten Carbonsäureanhydriden, wie z.B. bei der Addition von Maleinsäureanhydrid, darauf geachtet werden, daß keine Lösungsmittel eingesetzt werden, die unter Katalyse der tertiären Stickstoffgruppen mit dem ungesättigten Carbonsäureanhydrid reagieren. Nicht verwendbar sind daher beispielsweise Aceton, Methylethylketon, Butylacetat sowie andere acetylierende Lösungsmittel. Verwendet werden können Kohlenwasserstoffe und polare Lösungsmittel, wie Dimethylformamid, Dimethylacetamid, n-Methylpyrrolidon etc.

Die tertiären Aminogruppen können Verwendung von Monomeren mit tertiären Aminogruppen als Komponente $m_5$ in das Copolymerisat eingebaut werden.

Bevorzugt werden die tertiären Aminogruppen aber durch Umsetzen des hydroxyl- und carboxylgruppenhaltigen Polymerisats mit Verbindungen V, die pro Molekül durchschnittlich 0,8 bis 1,5, vorzugsweise eine, freie Isocyanatgruppe und mindestens eine tertiäre Aminogruppe enthalten, eingeführt. Es ist aber auch möglich, das hydroxylgruppenhaltige Copolymerisat zunächst mit den Verbindungen V umzusetzen und dann erst die Carboxylgruppen durch Umsetzen mit einem Carbonsäureanhydrid in das Copolymer einzuführen. In diesem Fall kann - wie bereits ausgeführt - die Umsetzung mit dem Anhydrid bei niedrigeren Temperaturen erfolgen.

Die Menge der Verbindung V wird dabei so gewählt, daß das entstehende Harz eine Aminzahl von 0 bis 50 mg KOH/g aufweist. Sollen die Copolymerisate in Beschichtungsmitteln eingesetzt werden, die bei Raumtemperatur gehärtet werden, wird eine höhere Aminzahl von 10 bis 40 mg KOH/g eingestellt.

Die zur Einführung der tertiären Aminogruppe verwendeten Verbindungen V werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ bevorzugt einen Alkanolrest oder einen anderen hydroxylgruppenhaltigen Rest bedeutet und $R_2$ bzw. $R_3$ Alkyl- oder Cycloalkylreste darstellen können. Bevorzugt sind Dialkylalkanolamine, wie z.B. Dimethylethanolamin, Diethylethanolamin sowie deren höhere Homologe bzw. Isomere.

Als Di- oder Polyisocyanate sind beispielsweise geeignet:

Aromatische Isocyanate, wie z.B. 2,4-, 2,6-Toluylendiisocyanat und deren Gemische, 4,4'-Diphenylmethandiisocyanat, m-Phenylen-, p-Phenylen-, 4,4'-Diphenyl-, 1,5-Naphthalin-, 1,4-Naphthalin, 4,4'-Toluidin-, Xylylendiisocyanat sowie substituierte aromatische Systeme, wie z.B. Dianisidindiisocyanate, 4,4'-Diphenyletherdiisocyanate oder Chlordiphenyldiisocyanate und höherfunktionelle aromatische Isocyanate, wie z.B. 1,3,5-Triisocyanatobenzol, 4,4'; 4''-Triisocyanattriphenylmethan, 2,4,6-Triisocyanatotoluol und 4,4'-Diphenyldimethylmethan-2,2',5,5'-tetraisocyanat; cycloaliphatische Isocyanate, wie z.B. 1,3-Cyclopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat.

Vorzugsweise werden Diisocyanate mit unterschiedlich reaktiven Isocyanatgruppen eingesetzt, wie z.B. Isophorondiisocyanat.

Die Umsetzung zwischen dem Amin und dem Isocyanat erfolgt bei Temperaturen von 0 bis 80°C, vorzugsweise von 20 bis 50°C. Die Mengenverhältnisse der Reaktionspartner werden so gewählt, daß die gebildete Verbindung V 0,8 bis 1,5, vorzugsweise 1, freie Isocyanatgruppen enthält.

Daneben besteht auch die Möglichkeit, das hydroxyl- und ggf. carboxylgruppenhaltige Copolymerisat mit Carbonsäuren umzusetzen, die ein tertiäres Stickstoffatom enthalten. Beispiele für derartige Carbonsäuren sind 3- und 4-Dimethylaminobenzoesäure, Picolinsäure und Dimethylaminosalicylsäure.

Schließlich ist es auch möglich, tertiäre Aminogruppen in das carboxylgruppenhaltige Copolymerisat durch Umsetzung eines Teils der Carboxylgruppen bzw. ggf. Carbonsäureanhydridgruppen des Copolymerisats mit Verbindungen, die außer einer tertiären Aminogruppe noch eine Alkohol- oder primäre oder sekundäre Aminogruppe oder eine Thiolgruppe enthalten, einzuführen.

Beispiele für Alkohole mit tertiären Aminogruppen sind Addukte von sekundären Aminen und Epoxidverbindungen. Beispiele für geeignete sekundäre Amine sind Dimethylamin, Diethylamin, Dipropylamin, Dibutylamin, Morpholin und Pyrrolidin.

Beispiele für geeignete Epoxidverbindungen sind Ethylenoxid, Propylenoxid, Butylenoxid, Styroloxid und Cyclohexenoxid.

Geeignete Alkohole mit tertiären Aminogruppen, die durch Reaktion von sekundären Aminen mit Epoxidverbindungen erhalten werden, sind Dimethylaminoethanol, Diethylaminoethanol, Di-n-propylaminoethanol, Diisopropylaminoethanol, Di-n-butylaminoethanol, N-(2-hydroxiethyl)morpholin, N-(2-hydroxiethyl)piperidin, N-(2-hydroxiethyl)pyrrolidon, N-(2-hydroxiethyl)aziridin, N,N′-Dimethyl-2-hydroxipropylamin, N,N′-Diethyl-2-hydroxipropylamin, Triethanolamin und Tripropanolamin.

Weitere Beispiele für tertiäre Aminogruppen enthaltende Alkohole sind Vinylpolymere, die sowohl eine tertiäre Aminogruppe als auch eine Hydroxylgruppe in der Seitenkette haben und erhältlich sind durch Copolymerisation der genannten tertiäre Aminogruppen enthaltenden (Meth)acrylatmonomeren mit OH-Gruppen enthaltenden Monomeren, wie beispielsweise β-Hydroxiethyl(meth)-acrylat.

Beispiele für die primären oder sekundären Amine, welche eine tertiäre Aminogruppe enthalten, sind N,N′-Dialkyl- 1,3-propylendiamine, wie z.B. N,N′-Dimethyl-1,3-propylen- diamin, N,N′-Diethyl-1,3-propylendiamin und N,N′-Dialkyl-1,4-tetramethylendiamine, wie z.B. N,N′-Dimethyl-1,4-tetramethylendiamin und N,N′-Diethyl-1,4-tetramethylendiamin. Weiterhin kommen N,N′-Dialkyl-1,6-hexamethylendiamine und N-Alkylpiperazine sowie 2-Aminopyridin, 4-Aminopyridin und N-Alkylaminopyridin in Frage.

Selbstverständlich können die tertiären Aminogruppen auch durch Kombination verschiedener Methoden in das Copolymerisat A eingeführt werden.

Weiterhin können die in den erfindungsgemäßen Überzugsmitteln als wesentliche Bindemittelkomponente A eingesetzten carboxylgruppenhaltigen Copolymerisate auch mittels radikalischer Lösungsmittelpolymerisation hergestellt werden. Geeignete carboxylgruppenhaltige Copolymerisate sind daher auch die in der PCT-Anmeldung mit der internationelen Veröffentlichungsnummer WO 87/02041 beschriebenen carboxylgruppenhaltigen Copolymerisate. Diese carboxylgruppenhaltigen Acrylatcopolymerisate werden hergestellt durch Polymerisation der Monomeren in einem organischen Lösungsmittel bei Temperaturen zwischen 70 und 130°C, bevorzugt zwischen 80 und 120°C, bevorzugt unter Verwendung von mindestens 0,5 Gew.-%, bevorzugt mindestens 2,5 Gew.-%, bezogen auf das Gesamtgewicht der Monomeren, eines Polymerisa- tionsreglers und in Gegenwart von 0,5 bis 7 Gew.-%, bezogen auf das Gesamtgewicht der Monomeren, eines Polymerisationsinitiators.

Die Polymerisation wird in einem organischen, gegenüber den eingesetzten Monomeren und gegenüber Carbonsäureanhydriden inerten Lösungsmittel durchgeführt. Beispiele für geeignete Lösungsmittel sind Glykolether, wie z.B. Diglykoldimethylether; Aromaten, wie z.B. Toluol, Xylol, Solvent Naptha®, Schwerbenzol, verschiedene Solvesso® Typen, verschiedene Shellsol®-Typen und Deasol sowie höhersiedende aliphatische und cycloaliphatische Kohlenwasserstoffe, wie z.B. verschiedene Testbenzine, Mineralterpentinöl, Tetralin und Dekalin.

Enthält das Copolymerisat tertiäre Aminogruppen, muß - wie bereits auf Seite 17 dieser Beschreibung ausgeführt - darauf geachtet werden, daß keine Lösungsmittel eingesetzt werden, die unter Katalyse der tertiären Aminogruppen mit dem ungesättigten Carbonsäureanhydrid reagieren.

Bevorzugt wird die Reaktion in Gegenwart von Polymerisationsreglern durchgeführt, da so Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Die Regler werden vorzugsweise in einem der Monomerenzuläufe gelöst und zusammen mit den Monomeren zugegeben.
Geeignete radikalische Initiatoren sind die bereits auf Seite 7 bei der Beschreibung der Massenpolymerisation aufgeführten Verbindungen. Geeignet sind außerdem Azo-Initiatoren, wie z.B. Azoisobutyronitril, 2,2'-Azobis(2-methylbutannitril), 1,1'-Azobis(cyclohexancarbonitril) und 2,2'-Azobis(2-dimethylbutannitril).
Die Auswahl des jeweiligen Initiator richtet sich dabei nach den Reaktionsbedingungen. Bei Einsatz von mehr als 1 Gew.-% Mercaptan, bezogen auf das Gesamtgewicht der Monomeren, werden bevorzugt nicht oxidierende Initiatoren eingesetzt. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 0,5 bis 1 Stunde länger als der Monomerenzulauf, um so auch eine gute Wirkung während der Nachpolymerisationsphase zu erzielen. Werden Initiatoren mit einer langen Halbwertszeit unter den vorliegenden Reaktionstemperaturen eingesetzt, so ist es auch möglich, den Initiator vorzulegen.

Die carboxylgruppenhaltigen Copolymerisate sind herstellbar durch die eben beschriebene Lösungspolymerisation von

$I_1$) 0 bis 30 Gew.-%, bevorzugt 5 bis 20 Gew.-%, eines oder mehrerer carboxylgruppenhaltiger Monomerer
$I_2$) ggf. mehr als 3 bis 30 Gew.-%, bevorzugt 5 bis 25 Gew.-%, eines oder mehrerer Monomerer mit mindestens zwei polymerisierbaren, olefinisch ungesättigten Doppelbindungen und
$I_3$) mindestens 40 Gew.-% weiterer, copolymerisierbarer, ethylenisch ungesättigter Monomerer, wobei die Summe der Gewichtsteile der Komponenten $I_1$ bis $I_3$ jeweils 100 Gew.-% beträgt.

Durch die Verwendung von Monomeren $I_2$ mit mindestens zwei polymerisierbaren Doppelbindungen können gezielt die Eigenschaften der carboxylgruppenhaltigen Copolymerisate, wie z.B. Löslichkeit, gesteuert werden. Geeignet für die erfindungsgemäßen Überzugsmittel sind aber selbstverständlich auch Copolymerisate, bei deren Herstellung keine Monomeren mit mindestens 2 polymerisierbaren Doppelbindungen eingesetzt wurden.

Als Komponente $I_2$ können vorteilhaft Verbindungen der allgemeinen Formel

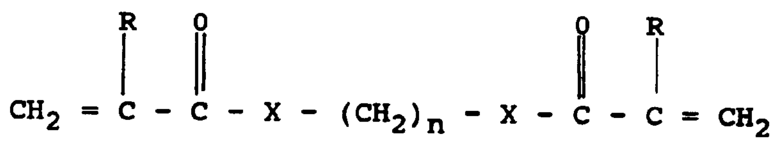

verwendet werden, in der bedeuten:
R = H oder $CH_3$
X = 0, NR', S mit R' = H, Alkyl, Aryl
n = 2 bis 8.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylol - propantriacrylat, Trimethylolpropantrimethacrylat und ähnliche Verbindungen.

Selbstverständlich können auch Kombinationen der mehrfach ungesättigten Monomeren eingesetzt werden.

Weitere mögliche Komponenten $I_2$ sind Umsetzungsprodukte aus einer Carbonsäure mit einer polymerisierbaren, olefinisch ungesättigten Doppelbindung und Glycidylacrylat und/oder Glycidylmethacrylat. Es kann auch eine mit einem ungesättigten, eine polymerisierbare Doppelbindung enthaltenden Alkohol veresterte Polycarbonsäure oder ungesättigte Monocarbonsäure als Komponente $I_2$ eingesetzt werden. Weiterhin können auch Diolefine, wie Divinylbenzol, eingesetzt werden. Als Monomere mit mindestens zwei polymerisierbaren, olefinisch ungesättigten Doppelbindungen werden auch Umsetzungsprodukte eines Polyisocyanats mit ungesättigte, polymerisierbare Doppelbindungen enthaltenden Alkoholen oder Aminen eingesetzt. Als Beispiel hierfür sei das Umsetzungsprodukt aus einem Mol Hexamethylendiisocyanat mit 2 Molen Allylalkohol genannt. Die mehrfach ethylenisch ungesättigten Monomeren können vorteilhafterweise Diester von Polyethylenglykol und/oder Polypropylenglykol mit einem mittleren Molekulargewicht von weniger als 1500, bevorzugt weniger als 1000 und Acrylsäure und/oder Methacrylsäure sein.

Beispiele für geeignete carboxylgruppenhaltige Monomere (Komponente $I_1$) sind die bereits bei der Beschreibung der mittels Massenpolymerisation hergestellten carboxylgruppenhaltigen Copolymerisate auf Seite 14 dieser Beschreibung aufgeführten Verbindungen.
Die Auswahl der Komponente $I_3$ richtet sich weitgehend nach den gewünschten Eigenschaften der Überzugsmittel in bezug auf Elastizität, Härte, Verträglichkeit und Polarität. Geeignet sind vinylaromatische Verbindungen, Hydroxialkylester $\alpha,\beta$-ungesättigter Carbonsäuren, Alkylester $\alpha,\beta$-ungesättigter Verbindungen, Monome-

re mit tertiären Aminogruppen und weitere ethylenisch ungesättigte Monomere sowie Kombinationen dieser Monomeren. Beispiele für geeignete Verbindungen sind die bereits auf den Seiten 14 bis 16 bei der Beschreibungen der carboxylgruppenhaltigen Massenpolymerisate aufgeführten Verbindungen. Bezüglich näherer Einzelheiten über die carboxylgruppenhaltigen Copolymerisate wird außerdem auf die PCT-Anmeldung mit der internationalen Veröffentlichungsnummer WO 87/02041 verwiesen, in der diese Copolymerisate ausführlich beschrieben sind.

Analog zu den mittels Massenpolymerisation hergestellten Copolymerisaten können auch bei den mittels Lösungspolymerisation hergestellten Copolymerisaten die Carboxylgruppen durch Verwendung von carboxylgruppenhaltigen Monomeren und/- oder Addition von Carbonsäureanhydriden an hydroxylgruppenhaltige Copolymerisate eingeführt werden, wie dies auf Seite 11 dieser Beschreibung erläutert ist. Auch die ggf. vorhandenen tertiären Aminogruppen können auf die verschiedensten Arten, wie auf den Seiten 17 bis 20 dieser Beschreibung erläutert, in das Copolymerisat eingeführt werden.

Die mittels Lösungspolymerisation hergestellten carboxyl- gruppenhaltigen Copolymerisate weisen üblicherweise zahlenmittlere Molekulargewichte von 1500 bis 6000, Säurezahlen von 15 bis 200 mg KOH/g, bevorzugt 30 bis 120 mg KOH/g und Aminzahlen von 0 bis 50 mg KOH/g, bevorzugt 10 bis 40 mg KOH/g auf.

Als wesentliche Bindemittelkomponente A geeignet sind schließlich auch die in der noch nicht veröffentlichten Patentanmeldung DE 3918669 beschriebenen carboxylgruppenhaltigen Copolymerisate.

Diese carboxylgruppenhaltigen Copolymeren weisen ein zahlenmittleres Molekulargewicht von 2000 bis 8000, eine Säurezahl von 15 bis 200 mg KOH/g, bevorzugt 30 bis 120 mg KOH/g und eine Aminzahl von 0 bis 50 mg KOH/g, bevorzugt 10 bis 40 mg KOH/g auf. Sie sind herstellbar, indem

I) mittels radikalischer Lösungspolymerisation bei Temperaturen von 130 bis 200°C, bevorzugt 150 bis 180°C aus

- $r_1$) 5 bis 25 Gew.-%, bevorzugt 10 bis 19 Gew.-%, eines oder mehrerer Vinylester von in $\alpha$-Stel- lung verzweigten, aliphatischen Monocarbonsäuren mit 5 bis 15 C-Atomen je Molekül,
- $r_2$) 10 bis 50 Gew.-%, bevorzugt 20 bis 45 Gew.-%, eines oder mehrerer vinylaromatischer Kohlenwasserstoffe,
- $r_3$) 5 bis 40 Gew.-%, bevorzugt 15 bis 35 Gew.-%, eines oder mehrerer Hydroxialkylester $\alpha,\beta$-ungesättigter Carbonsäuren,
- $r_4$) 0 bis 40 Gew.-% carboxylgruppenhaltigen, ethylenisch ungesättigten Monomeren und/oder anderen ethylenisch ungesättigten, copolymerisierbaren Monomeren,

wobei die Summe der Gewichtsteile der Komponenten $r_1$ bis $r_4$ jeweils 100 Gew.-% beträgt, ein hydroxylgruppen- und ggf. carboxylgruppenhaltiges Copolymer hergestellt worden ist und

II. ggf. das in der Stufe I erhaltene Copolymer mit Carbonsäureanhydriden umgesetzt worden ist, wobei die Menge an eingesetzten Carbonsäureanhydriden so gewählt wird, daß das entstehende Copolymer eine Säurezahl von 15 bis 200 mg KOH/g, bevorzugt 30 bis 120 mg KOH/g, aufweist.

Die Lösungspolymerisation der Komponente $r_1$ bis $r_4$ wird dabei in Gegenwart von in der Regel 0,1 bis 5,0 Gew.-%, bezogen auf die zu verarbeitende Monomerenmenge, radikalischem Initiator und bevorzugt in Gegenwart von bis zu 2 Gew.-% Regler, bezogen auf die zu verarbeitende Monomerenmenge, durchgeführt. Zugabe der Regler und Initiatoren sowie Beispiele für geeignete Regler und Initiatoren sind bereits bei der Beschreibung der Lösungspolymerisation auf Seite 22 dieser Beschreibung aufgeführt. Geeignete Lösungsmittel sind auf Seite 21 dieser Beschreibung aufgeführt.

Aufgrund der unterschiedlichen Reaktivität der eingesetzten Monomeren ist es für die Eigenschaften der resultierenden Copolymerisate entscheidend, daß die Polymerisation folgendermaßen durchgeführt wird:

In dem Reaktor werden zunächst mindestens 60 Gew.-%, bevorzugt 100 Gew.-%, der insgesamt einzusetzenden Menge der Komponente $r_1$ zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschrieben - vorzugsweise zusammen mit dem Katalysator allmählich zugefügt. Die ggf. noch vorhandene restliche Menge der Komponente $r_1$ sowie die übrigen Monomeren (Komponenten $r_2$, $r_3$ und $r_4$) werden innerhalb eines für alle Komponenten gleich langen Monomerenzugabezeitraumes (beträgt i.a. 2 - 10 h, wie für Acrylatcopolymerisationen üblich) zu der vorgelegten Komponente $r_1$ folgendermaßen zudosiert:

i) Die pro Zeiteinheit zugegebene Menge der ggf. noch vorhandenen Komponente $r_1$ (d.h. die Restmenge der Komponente $r_1$, die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente $r_1$ bevorzugt zusammen mit den Komponenten $r_3$ und $r_4$ zudosiert.

ii) Die pro Zeiteinheit zugegebene Menge der Komponenten $r_3$ und $r_4$ bleibt innerhalb des Monomerenzugabezeitraumes konstant.

iii) Die pro Zeiteinheit zugegebene Menge der Komponente $r_2$ wird innerhalb des Monomerenzugabezeitraumes so variiert, daß die innerhalb des ersten Drittels des Monomerenzugabezeitraumes ingesamt zugegebene Menge der Komponente $r_2$ 15 bis 30 Gew.-%, bevorzugt 18 bis 26 Gew.-%, der Gesamtmenge der Komponente $r_2$ beträgt. Innerhalb des zweiten Drittels des Monomerenzugabezeitraumes werden insgesamt 25 bis 40 Gew.-%, bevorzugt 30 bis 38 Gew.-% und innerhalb des letzten Drittels des Monomerenzugabezeitraumes werden 35 bis 60 Gew.-%, bevorzugt 40 bis 50 Gew.-%, der Gesamtmenge der Komponente $r_2$ zudosiert, wobei selbstverständlich die Summe der Zugabemengen im 1., 2. und 3. Drittel 100 Gew.-% beträgt.

Für die Variation der pro Zeiteinheit zugegebenen Menge der Komponente $r_2$ bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente $r_2$. Die Zahl der Stufen, bei denen die Zugabemenge jeweils geändert wird, kann beliebig gewählt werden. So kann beispielsweise die Zugabemenge pro Zeiteinheit der Komponente $r_2$ nur zu Beginn des zweiten und/oder zu Beginn des dritten Drittels erhöht werden. Innerhalb des Drittels bleibt die Zugabemenge pro Zeiteinheit dann jeweils konstant. Es ist aber auch möglich, die pro Zeiteinheit zugegebene Menge der Komponente $r_2$ kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben.

Die so erhaltenen ggf. carboxylgruppenhaltigen Copolymeren weisen bevorzugt ein mittleres Molekulargewicht von 1500 bis 8000 (Zahlenmittel) und eine OH-Zahl von 30 bis 200 mg KOH/g, bevorzugt 70 bis 150 mg KOH/g auf. Die so erhaltenen hydroxylgruppenhaltigen und ggf. carboxylgruppenhaltigen Copolymere werden dann in einem zweiten Schritt mit Carbonsäureanhydriden zu den entsprechenden carboxylgruppenhaltigen Copolymeren umgesetzt. Die Menge an eingesetztem Carbonsäureanhydrid wird dabei so gewählt, daß das resultierende Copolymer eine Säurezahl von 15 bis 200 mg KOH/g, bevorzugt 30 bis 120 mg KOH/g und eine OH-Zahl von 0 bis 60 mg KOH/g aufweist. Das zahlenmittlere Molekulargewicht des carboxylgruppenhaltigen Copolymers beträgt 2000 bis 8000.

Neben dieser bevorzugten Variante, zumindest einen Teil der Carboxylgruppen des Copolymers durch Addition von Carbonsäureanhydriden an hydroxylgruppenhaltige Copolymere (erhalten in Stufe I) einzuführen, besteht selbstverständlich auch die Möglichkeit, die Carboxylgruppen durch Einsatz entsprechender Mengen carboxylgruppenhaltiger Monomerer als Komponente $r_4$ direkt bei der Polymerisation in das Copolymer einzubauen.

Ggf. vorhandene tertiäre Aminogruppen können auf verschiedenste Weise, wie auf den Seiten 17 bis 21 dieser Beschreibung erläutert, in das Copolymerisat eingeführt werden.

Zu den in diesem Lösungspolymerisationsverfahren eingesetzten Komponenten $r_1$ bis $r_4$ ist folgendes auszuführen:

Als Komponente $r_1$ werden Vinylester von Monocarbonsäuren, bevorzugt Vinylester von in $\alpha$-Stellung verzweigten Monocarbonsäuren mit 5 bis 15 C-Atomen je Molekül eingesetzt. Die verzweigten Monocarbonsäuren können erhalten werden durch Umsetzen von Ameisensäuren oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppe vorwiegend an einem quaternären Kohlenstoffatom sitzt. Andere olefinische Ausgangsstoffe sind z.B. Propylentrimer, Propylentetramer und Diisobutylen. Die Vinyl- ester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am $\alpha$-C-Atom verzweigt sind. Besonders bevorzugt ist außerdem der Vinylester der p-Tertiärbutyl-benzoesäure. Beispiele für weitere, geeignete Vinylester sind Vinylacetat und Vinylpropionat.

Beispiele für die als Komponenten $r_2$ bis $r_4$ geeignete Verbindungen sind die bereits bei der Beschreibung der carboxylgruppenhaltigen Lösungspolymerisate auf den Seiten 24 aufgeführten Verbindungen, wobei als Komponente $r_4$ allerdings keine Monomere mit mindestens zwei polymerisierbaren Doppelbindungen eingesetzt werden.

Außer diesen beschriebenen carboxylgruppenhaltigen Polyestern und/oder Copolymerisaten sind Selbstverständlich auch andere carboxylgruppenhaltige Polymere mit einem zahlenmittleren Molekulargewicht von

500 bis 8000 und einer Säurezahl von 15 bis 200 mg KOH/g einsetzbar, sofern sie zu den gewünschten Eigenschaften der Überzugsmittel führen.

Die überzugsmittel enthalten das carboxylgruppenhaltige Copolymerisat (Komponente A) in einer Menge von 10 - 70 Gew.-%, bezogen auf das Gesamtgewicht der Überzugsmittel. Die epoxidgruppenhaltigen Copolymerisate (Komponente B) werden üblicherweise in einer Menge von 10 bis 50 Gew.-%, bezogen auf das Gesamtgewicht der Überzugsmittel, eingesetzt. Der Gehalt an organischen Lösungsmittel beträgt 20 bis 50 Gew.-%, bezogen auf das Gesamtgewicht der Überzugsmittel.

Ggf. können die Überzugsmittel noch einen Vernetzungskatalysator enthalten. Hierbei eignen sich besonders tertiäre Amine, quartäre Ammoniumverbindungen, wie z.B. Benzyltrimethylammoniumhydroxid und Benzyltrimethylammoniumchlorid, spezielle Chromverbindungen sowie Zinnverbindungen. Selbstverständlich erübrigt sich der Einsatz eines Vernetzungskatalysators in den meisten Fällen, bei denen bereits tertiäre Aminogruppen in das Acrylatcopolymerisat eingebaut sind. Durch den Einsatz eines internen oder externen Vernetzungskatalysators werden tiefere Einbrenntemperaturen und kürzere Einbrennzeiten erreicht. Vorzugsweise wird der Vernetzungskatalysator in einer Menge von 0,5 bis 10 Gew.-%, bezogen auf das Gesamtgewicht der Di- bzw. Polyepoxidkomponente und der Bindemittelkomponente, verwendet.

Die erfindungsgemäßen Überzugsmittel können außerdem noch übliche Pigmente und Füllstoffe in üblichen Mengen, bevorzugt 0 bis 60 Gew.-%, bezogen auf die Gesamtzusammensetzung, sowie weitere übliche Hilfs- und Zusatzstoffe, wie z.B. Verlaufsmittel, Silikonöle, Weichmacher, wie Phosphorsäureester und Phthalsäureester, viskositätskontrollierende Zusätze, Mattierungsmittel, UV-Absorber und Lichtschutzmittel in üblichen Mengen, bevorzugt 0 bis 10 Gew.-%, bezogen auf die Gesamtzusammensetzung, enthalten.

Diese Überzugsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Überzugsmittel eignen sich für die Automobilserienlackierung und - wenn durch entsprechende Wahl der Härterkomponente niedrige Härtungstemperaturen zwischen 20 und 80°C angewandt werden können (s.o.) - auch besonders für die Reparaturlackierung von Kraftfahrzeugen. Sie werden dabei als Grundierung, Deck- oder Klarlack eingesetzt.

Die erfindungsgemäßen Überzugsmittel werden hergestellt, indem Bindemittel und Vernetzer ggf. unter Zugabe von Lösungsmittel vermischt werden. Dem Bindemittel oder dem Vernetzer können ggf. Pigmente und/oder Füllstoffe nach üblichen Verfahren (Dispergieren, Dissolvern u.ä.) zugegeben werden. Ggf. eingesetzte weitere Zusatzstoffe können sowohl dem Bindemittel oder dem Vernetzer als auch dem fertigen Überzugsmittel zugesetzt werden.

Gegenstand der vorliegenden Erfindung ist daher auch ein Verfahren zur Herstellung von Überzugsmitteln, enthaltend

A) ein oder mehrere carboxylgruppenhaltige Polymere mit einem zahlenmittleren Molekulargewicht $M_n$ von 500 bis 8000 und einer Säurezahl von 15 bis 200 mg KOH/g als wesentliche Bindemittelkomponente und

B) ein oder mehrere epoxidgruppenhaltige Verbindungen als Vernetzungsmittel,

bei dem die Bindemittelkomponente A und das Vernetzungsmittel B erst kurz vor der Applikation der Überzugsmittel gemischt werden, dadurch gekennzeichnet, daß die epoxidgruppenhaltige Verbindung B ein epoxidgruppenhaltiges Copolymerisat ist, ein zahlenmittleres Molekulargewicht $M_n$ von 300 bis 5000, bevorzugt 500 bis 3500 und eine gelpermeationschromatographisch gemessene Uneinheitlichkeit ($M_w/M_n$) von $\leqq 3$, bevorzugt $\leqq 2$ aufweist und hergestellt worden ist durch kontinuierliche Massenpolymerisation bei Temperaturen zwischen 130 und 350°C und Drucken oberhalb 1 bar.

Bezüglich der Beschreibung der in dem Verfahren eingesetzten Komponenten und der Durchführung dieses Verfahrens wird auf die Seiten 5 bis 32 dieser Beschreibung verwiesen.

Die Erfindung wird in den folgenden Beispielen näher erläutert. Alle Angaben über Teile und Prozentsätze sind Gewichtsangaben, falls nicht ausdrücklich etwas anderes festgestellt wird.

I.1. Herstellung des Epoxidvernetzers

Ein Gemisch aus
15 Teilen Styrol
40 Teilen Glycidylmethacrylat
45 Teilen n-Butylacrylat

wird in einem kontinuierlichen Druckautoklaven auf 230°C erhitzt. Die Verweilzeit des Reaktionsgemisches beträgt 10 Minuten. Der Druck in der Polymerisationsapparatur wird mit Hilfe einer periodisch schwingenden Druckregelung im Bereich zwischen 15 und 32 bar gehalten. Das Reaktionsgemisch wird anschließend durch

einen statischen Mischer zur Nachpolymerisation bei 200°C bei 15 Minuten Verweilzeit gedrückt. Nicht umgesetzte Monomere werden dann unter Vakuum abdestilliert.

Das Epoxidharz wird dann 80%ig in Butylacetat gelöst. Die resultierende Harzlösung hat eine Viskosität von 25s, gemessen im DIN 4 Auslaufbecher bei 23°C, auf. Das erhaltene Epoxidharz weist ein Epoxidäquivalentgewicht von 316, bezogen auf Festharz, ein zahlenmittleres Molekulargewicht von 1.200 und eine Uneinheitlichkeit von $M_w/M_n$ von 1,9, bestimmt nach der in B. Vollmert, Grundriß der makromolekularen Chemie, E. Vollmert Verlag, Karlsruhe 1982, Band III, Seite 72 ff beschriebenen Methode gegen Polystyrol-Standard.

II.1. Herstellung der carboxylgruppenhaltigen Bindemittel komponente A

In einen 4-Liter-Polykondensationskessel mit Rührer, dampfbeheizter Kolonne und Wasserabscheider werden 482,2 Teile Hexahydrophthalsäureanhydrid, 585,3 Teile 1,4-Cyclohexandicarbonsäure, 611,8 Teile Trimethylolpropan, 123,1 Teile Hexandiol-1,6, 155,2 Teile Methyldiethanolamin, 79,6 Teile Benzoesäure, 206,1 Teile Isononansäure, 87,8 Teile Xylol und 2,196 Teile Triisodecylphosphit gegeben und langsam aufgeheizt. Es wird bei einer Temperatur von max. 190°C bis zu einer Säurezahl von 9,1 mg KOH/g und einer Viskosität von 4,2 dPas (50%ig in Butylglykol) kondensiert, anschließend wird gekühlt und bei 130°C mit 387,4 Teilen Xylol angelöst. Zu dieser Lösung werden nun 367,0 Teile Hexahydrophthalsäureanhydrid, 80,9 Teile Xylol und 0,742 Teile Triisodecylphosphit gegeben. Die Addition des Anhydrides erfolgt bei 80°C, bis eine Säurezahl von 69,4 mgKOH/g und eine Viskosität von 8 dPas (50%ig in Butylglykol) erreicht ist. Danach wird mit 718,6 Teilen Xylol und 182,1 Teilen sek. Butanol angelöst. Der so erhaltene Polyester hat einen Festkörper von 59,7 %, eine Säurezahl von 67 mgKOH/g (fest), eine Aminzahl von 31 mgKOH/g, eine Viskosität (original) von 27,5 dPas und eine Farbzahl von 1-2 (Gardner-Holdt).

II.2. Herstellung der carboxylgruppenhaltigen Bindemittel komponente B

In einen 4-Liter-Edelstahlpolymerisationskessel mit Rührer, Rückflußkühler, zwei Monomerenzuläufen und einem Initiatorzulauf werden eingewogen und auf 100°C aufgeheizt:
484,0 Teile Xylol und 161,0 Teile 1-Methoxipropylacetat-2.

In den Monomerenzulauf A werden eingewogen:
80,0 Teile Dimethylaminoethylmethacrylat
90,0 Teile Xylol
30,0 Teile 1-Methoxipropylacetat-2

In den Monomerenzulauf B werden eingewogen:
143,0 Teile Methylmethacrylat
120,0 Teile n-Butylacrylat
120,0 Teile Cyclohexylmethacrylat
120,0 Teile 4-Hydroxibutylacrylat
120,0 Teile Hydroxiethylmethacrylat
97,0 Teile Divinylbenzol (62%ig in Ethylstyrol)
22,4 Teile Mercaptoethanol
0,24 Teile Triisodecylphosphit

In den Initiatorzulauf werden eingewogen:
19,2 Teile 2,2′-Azobis(2-methylbutannitril)
58,0 Teile Xylol
19,2 Teile 1-Methoxipropylacetat-2

Mit dem Start aller Zuläufe wird gleichzeitig begonnen, innerhalb von 3h werden die beiden Monomerenzuläufe gleichmäßig zudosiert, innerhalb von 3,75h wird der Initiatorzulauf zudosiert. Während der Polymerisation wird die Temperatur im Kessel auf 108 bis 100°C gehalten. Danach wird noch 2h nachpolymerisiert. Die so erhaltene Acrylatharzlösung hat einen Festkörper von 51% und eine Viskosität von 24 dPas. Es werden nun 169,0 Teile Hexahydrophthalsäureanhydrid zugegeben und bei 100°C an das Acrylatharz addiert. Nachdem die Säurezahlbestimmung in wäßriger und alkoholischer KOH gleiche Werte ergeben, wird durch Abdestillieren von Lösemitteln auf 55-56% Festkörper aufkonzentriert und anschließend mit sek. Butanol auf 51% Festkörpergehalt verdünnt. Die so erhaltene Acrylatharzlösung hat eine Säurezahl von 72 mgKOH/g und eine Viskosität von 27 dPas sowie eine Aminzahl von 28,6 mgKOH/g.

II.3. Herstellung der carboxylgruppenhaltigen Bindemittelkomponente C

In einen 4-Liter-Edelstahlpolymerisationskessel mit Rührer, Rückflußkühler, zwei Monomerenzuläufen

und einem Initiatorzulauf werden eingewogen und auf 100°C aufgeheizt:
382,0 Teile Xylol und 382,0 Teile 1-Methoxipropylacetat-2

In den Monomerenzulauf A werden eingewogen:

82,0 Teile Dimethylaminoethylmethacrylat
350,0 Teile Hexahydrophthalsäuremono-2-methacryloxiethylester
100,0 Teile Xylol
100,0 Teile 1-Methoxipropylacetat-2

In den Monomerenzulauf B werden eingewogen:

148,0 Teile Butylmethacrylat
124,0 Teile n-Butylacrylat
124,0 Teile Cyclohexylmethacrylat
72,0 Teile Hydroxipropylmethacrylat
100,0 Teile Divinylbenzol (62%ig in Ethylstyrol)
24,0 Teile Mercaptoethanol
0,53 Teile Triisodecylphosphit

In den Initiatorzulauf werden eingewogen:

20,0 Teile 2,2′-Azobis(2-methylbutannitril)
40,0 Teile Xylol
40,2 Teile 1-Methoxipropylacetat-2

Mit dem Start der Monomeren-Zuläufe wird gleichzeitig begonnen, der Initiatorzulauf wird 10 min später gestartet. Innerhalb von 3h werden die beiden Monomerenzuläufe gleichmäßig zudosiert, innerhalb von 3,75h wird der Initiatorzulauf zudosiert. Während der Polymerisation wird die Temperatur im Kessel auf 108-110°C gehalten. Danach wird noch 2h nachpolymerisiert. Durch Abdestillieren von Lösemittel wird auf ca. 60% Festkörper aufkonzentriert, danach wird mit sek. Butanol verdünnt. Die so erhaltene Acrylatharzlösung hat einen Festkörper von 51% und eine Säurezahl von 67 mgKOH/g sowie eine Aminzahl von 34 mgKOH/g.

II.4. Herstellung der carboxylgruppenhaltigen Bindemittelkomponente D

In einem 4-Liter-Edelstahlkessel mit Rührer,
Rückflußkühler und Zulaufeinrichtungen werden 425,75 Teile Shellsol A® (Gemisch von C3-C4-Alkylsubstituierten Aromaten) und 400 Teile eines handelsüblichen Gemisches von Vinylestern von gesättigten aliphatischen Monocarbonsäuren mit überwiegend 10 C-Atomen, die am α-C-Atom verzweigt sind, vorgelegt und auf 170°C aufgeheizt.

In den Monomerentank I werden eingewogen und vermischt:

600,0 Teile Hydroxiethylmethacrylat
250,0 Teile n-Butylacrylat
150,0 Teile N,N′-Dimethylaminoethylmethacrylat
200,0 Teile Butylmethacrylat
4,1 Teile Triisodecylphosphit

In den Monomerentank II werden eingewogen und vermischt:

400 Teile Styrol.

In den Initiatortank werden eingewogen und vermischt:

22,0 Teile Dicumylperoxid
66,0 Teile Shellsol A®

Der Inhalt des Monomerentanks I und des Initiatortanks wird innerhalb von 4,5h gleichmäßig zudosiert. Der Inhalt des Monomerentanks II wird innerhalb von 4,5h so zudosiert, daß in den ersten 90 Minuten 100 Teile, von der 91. bis zur 180. Minute der Gesamtlaufzeit 140 Teile und in der restlichen Zulaufzeit 160 Teile Styrol dosiert werden. Während des Zulaufs wird die Temperatur im Kessel bei 165-170°C gehalten. Nach Beendigung der Zuläufe werden innerhalb von 1h nochmals

5,0 Teile Dicumylperoxid
15,0 Teile Shellsol A®

aus dem Initiatortank zudosiert. Danach wird noch weitere 2h bei dieser Temperatur nachpolymerisiert. Danach wird mit 361 Teilen Xylol angelöst. Der nichtflüchtige Anteil (1h, 130°C) dieser Copolymerlösung beträgt 70%, die Viskosität der Lösung (50% in Butylacetat) beträgt bei 23°C 3,25 dPas.

1325,0 Teile dieser Acrylatharzlösung werden in einen 4-Liter-Edelstahlkessel mit Rührer und Rückflußkühler eingewogen. Nach Zugabe von 221,4 Teilen Hexahydrophthalsäureanhydrid wird auf 130°C aufgeheizt und solange bei dieser Temperatur gehalten, bis die Säurezahlen in alkoholischem und in wäßrigem Medium gleich sind und bei 70-72 mg KOH/g liegen. Die Copolymerlösung wird mit 221,25 Teilen Xylol auf einen Fest-

körper von 65% angelöst und mit 321,5 Teilen Sekundär-Butanol weiterverdünnt.

Der nichtflüchtige Anteil (1h, 130°C) dieser Copolymerlösung beträgt 55%, die Viskosität der Lösung (50% in Butylacetat) beträgt bei 23°C 24,5 dPas. (ICI-Platte Kegel-Viskosität). Das Copolymerisat weist eine Säurezahl von 70 mg KOH/g und eine Aminzahl von 24 mg KOH/g auf.

II.5. Herstellung der carboxylgruppenhaltigen Bindemittelkomponente E

In einem 4-Liter-Edelstahlkessel mit Rührer, Rückflußkühler und Zulaufeinrichtungen werden 419,75 Teile Shellsol A® (Gemisch von C3-C4-Alkylsubstituierten Aromaten) und 300 Teile eines handelsüblichen Gemisches von Vinylestern von gesättigten aliphatischen Monocarbonsäuren mit überwiegend 10 C-Atomen, die am α-C-Atom verzweigt sind, vorgelegt und auf 170°C aufgeheizt.

In den Monomerentank I werden eingewogen und vermischt:

700,0 Teile Hydroxiethylmethacrylat
200,0 Teile n-Butylacrylat
200,0 Teile Methylmethacrylat
20,0 Teile Mercaptoethanol.

In den Monomerentank II werden eingewogen und vermischt:

600,0 Teile Styrol.

In den Initiatortank werden eingewogen und vermischt:

26,0 Teile Dicumylperoxid
78,0 Teile Shellsol A®

Der Inhalt des Monomerentanks I und des Initiatortanks wird innerhalb von 4,5h gleichmäßig zudosiert. Der Inhalt des Monomerentanks II wird innerhalb von 4,5h so zudosiert, daß in den ersten 90 Minuten 100 Teile, von der 91. bis zur 180. Minute der Gesamtlaufzeit 140 Teile und in der restlichen Zulaufzeit 160 Teile Styrol dosiert werden. Während des Zulaufs wird die Temperatur im Kessel bei 165 bis 170°C gehalten. Nach Beendigung der Zuläufe werden innerhalb von 1h nochmals

5,0 Teile Dicumylperoxid
15,0 Teile Shellsol A®

aus dem Initiatortank dosiert. Danach wird noch weitere 2 Stunden bei dieser Temperatur nachpolymerisiert. Anschließend wird mit 427,3 Teilen Xylol und 427,3 Teilen 1-Methoxipropylacetat-2 angelöst. Der nichtflüchtige Anteil (1h, 130°C) dieser Copolymerlösung beträgt 60%, die Viskosität der Lösung (50% in Butylacetat) beträgt bei 23°C 10,80 dPas (ICI-Platte-Kegel-Viskosität).

1560,0 Teile dieser Acrylatharzlösung werden in einen 4-Liter-Edelstahlkessel mit Rührer und Rückflußkühler eingewogen. Nach Zugabe von 222,7 Teilen Hexahydrophthalsäureanhydrid wird auf 130°C aufgeheizt und solange bei dieser Temperatur gehalten, bis die Säurezahlen in alkoholischem und in wäßrigem Medium gleich sind und bei 70-72 mg KOH/g liegen.

Anschließend wird auf 60°C gekühlt, und es werden 296,6 Teile eines 1:1-Adduktes aus N,N'-Dimethylethanolamin und Isophorondiisocyanat sowie 12,9 Teile Dibutylzinndilaurat zugegeben. Die Temperatur wird solange bei 60°C gehalten, bis kein freies Isocyanat mehr nachweisbar ist. Die Copolymerlösung wird mit 462,3 Teilen Sekundär-Butanol auf einen Fest- körper von 50% verdünnt. Die so erhaltene Copolymerlösung hat eine Säurezahl von 63 mg KOH/g, eine Viskosität von 8,5 dPas bei 23°C und eine Aminzahl von 24 mg KOH/g.

Beispiele 1-4

Durch Vermischen des Epoxidvernetzers mit den carboxylgruppenhaltigen Bindemittelkomponenten in den in Tabelle 1 angegebenen Mengen werden die Lacke 1 bis 4 hergestellt. Diese Lacke werden mit Butylacetat auf eine Auslaufviskosität von 25s, gemessen im DIN 4 Becher bei 23°C, eingestellt. Die Lacke werden mit einer Naßfilmstärke von 100 µm auf Glasplatten aufgezogen, unter verschiedenen Bedingungen getrocknet und dann beurteilt. Die Trocknung erfolgt dabei durch

a) 2 Tage Aufbewahrung bei Raumtemperatur oder
b) 30 Minuten bei 60°C und anschließender Lagerung bei Raumtemperatur von 1h oder
c) 30 Minuten bei 100°C und anschließender Lagerung bei Raumtemperatur von 1h.

Die resultierenden Beschichtungen zeigten bei Trocknung bei Raumtemperatur (Trocknung a) bereits nach weniger als 2h Staub- und Klebfreiheit. Die Beschichtungen zeigten außerdem bei allen Trocknungsmethoden a, b oder c jeweils gute Benzinbeständigkeit, hohen Glanz sowie hohe Härte bei guter Flexibilität.

**Tabelle 1:**
**Zusammensetzungen der Lacke 1 bis 4 in Gewichtsteilen**

| | Lack 1 | Lack 2 | Lack 3 | Lack 4 |
|---|---|---|---|---|
| Vernetzer | 50 | 25,3 | 10 | 25,3 |
| Bindemittelkomp. A | 55 | -- | -- | -- |
| Bindemittelkomp. B | 129 | -- | -- | -- |
| Bindemittelkomp. C | -- | 42,6 | -- | -- |
| Bindemittelkomp. D | -- | -- | 28,5 | -- |
| Bindemittelkomp. E | -- | -- | -- | 44,45 |

## Patentansprüche

1. Überzugsmittel, enthaltend
   A) ein oder mehrere carboxylgruppenhaltige Copolymerisate und/oder einen oder mehrere carboxylgruppenhaltige Polyester mit einem zahlenmittleren Molekulargewicht $M_n$ von 500 bis 8000 und einer Säurezahl von 15 bis 200 mg KOH/g als wesentliche Bindemittelkomponente und
   B) ein oder mehrere epoxidgruppenhaltige Verbindun- gen als Vernetzungsmittel,

   dadurch gekennzeichnet, daß die epoxidgruppenhaltige Verbindung B ein epoxidgruppenhaltiges Copolymerisat ist, ein zahlenmittleres Molekulargewicht $M_n$ von 300 bis 5000, bevorzugt 500 bis 3500 und eine gelper- meationschromatographisch gemessene Uneinheitlichkeit ($M_w/M_n$) von $\leqq$ 3, bevorzugt von $\leqq$ 2 aufweist und hergestellt worden ist durch kontinuierliche Massenpoly- merisation bei Temperaturen zwischen 130 und 350°C und Drucken oberhalb 1 bar von
   a) 10 bis 60 Gew.-%, bevorzugt 15 bis 50 Gew.-%, eines oder mehrerer vinylaromatischer Kohlenwas- serstoffe,
   b) 10 bis 50 Gew.-%, bevorzugt 15 bis 30 Gew.-%, eines oder mehrerer ethylenisch ungesättigter Monomerer mit mindestens einer Epoxidgruppe pro Molekül und
   c) 5 bis 80 Gew.-%, bevorzugt 20 bis 50 Gew.-%, anderer ethylenisch ungesättigter copolymerisierbarer Monomerer,

   wobei die Summe der Gewichtsanteile der Komponenten a bis c jeweils 100 Gew.-% beträgt.

2. Verfahren zur Herstellung von Überzugsmitteln, enthaltend

A) ein oder mehrere carboxylgruppenhaltige Copolymerisate und/oder einen oder mehrere carboxylgruppenhaltige Polyester mit einem zahlenmittleren Molekulargewicht $M_n$ von 500 bis 8000 und einer Säurezahl von 15 bis 200 mg KOH/g als wesentliche Bindemittelkomponente und

B) ein oder mehrere epoxidgruppenhaltige Verbindungen als Vernetzungsmittel,

bei dem die Bindemittelkomponente A und das Vernetzungsmittel B erst kurz vor der Applikation der Überzugsmittel gemischt werden, dadurch gekennzeich- net, daß die epoxidgruppenhaltige Verbindung B ein epoxidgruppenhaltiges Copolymerisat ist, ein zahlen- mittleres Molekulargewicht $M_n$ von 300 bis 5000, bevorzugt 500 bis 3500 und eine gelpermeationschromato- graphisch gemessene Uneinheitlichkeit ($M_w/M_n$) von $\leqq 3$, bevorzugt von $\leqq 2$ aufweist und hergestellt worden ist durch kontinuierliche Massenpolymerisation bei Temperaturen zwischen 130 und 350°C und Drucken oberhalb 1 bar von

a) 10 bis 60 Gew.-%, bevorzugt 15 bis 50 Gew.-%, eines oder mehrerer vinylaromatischer Kohlenwasserstoffe,

b) 10 bis 50 Gew.-%, bevorzugt 15 bis 30 Gew.-%, eines oder mehrerer ethylenisch ungesättigter Monomerer mit mindestens einer Epoxidgruppe pro Molekül und

c) 5 bis 80 Gew.-%, bevorzugt 20 bis 50 Gew.-%, anderer ethylenisch ungesättigter copolymerisierbarer Monomerer,

wobei die Summe der Gewichtsanteile der Komponenten a bis c jeweils 100 Gew.-% beträgt.

**3.** Überzugsmittel oder Verfahren nach Anspruch 1 oder 2, dadurch gekennzeichnet, daß das epoxidgruppenhaltige Copolymerisat B unter Verwendung von Glycidylmethacrylat als einem der ethylenisch ungesättigten Monomeren hergestellt worden ist.

**4.** Überzugsmittel oder Verfahren nach einem der Ansprüche 1 bis 3 , dadurch gekennzeichnet, daß das epoxid- gruppenhaltige Copolymerisat B unter Verwendung von Alkylestern der Acryl- und/oder Methacrylsäure als einem der ethylenisch ungesättigten Monomeren hergestellt worden ist.

**5.** Überzugsmittel oder Verfahren nach einem der Ansprüche 1 bis 4, dadurch gekennzeichnet, daß das epoxid- gruppenhaltige Copolymerisat B ein Epoxidäquivalent- gewicht von 150 bis 2000, bevorzugt 500 bis 1000, aufweist.

**6.** Überzugsmittel oder Verfahren nach einem der Ansprü- che 1 bis 5, dadurch gekennzeichnet, daß die als Bindemittel A eingesetzten carboxylgruppenhaltigen Polymeren eine Säurezahl von 30 bis 120 mg KOH/g, aufweisen.

**7.** Überzugsmittel oder Verfahren nach einem der Ansprü- che 1 bis 6, dadurch gekennzeichnet, daß die als Bindemittel A eingesetzten carboxylgruppenhaltigen Polymeren eine Aminzahl von 0 bis 50 mg KOH/g, bevorzugt 10 bis 40 mg XOH/g aufweisen.

**8.** Überzugsmittel oder Verfahren nach einem der Ansprüche 1 bis 7, dadurch gekennzeichnet, daß die als Bindemittel A eingesetzten carboxylgruppenhaltigen Polymeren hergestellt worden sind, indem zunächst ein hydroxylgruppenhaltiges Polymer mit einer OH-Zahl von 30 bis 200 mg KOH/g hergestellt worden ist, das dann anschließend mit Carbonsäureanhydriden zu den entsprechenden carboxylgruppenhaltigen Polymeren umgesetzt worden ist.

**9.** Überzugsmittel oder Verfahren nach einem der Ansprüche 1 bis 8, dadurch gekennzeichnet, daß die als Bindemittel A eingesetzten carboxylgruppenhaltigen Polymeren ebenfalls hergestellt worden sind durch kontinuierliche Massenpolymerisation bei Temperaturen zwischen 130 und 350°C und Drucken oberhalb 1 bar.

**10.** Überzugsmittel oder Verfahren nach einem der Ansprüche 1 bis 8, dadurch gekennzeichnet, daß die als Bindemittel A eingesetzten carboxylgruppenhaltigen Polymeren durch radikalische Lösungspolymerisation hergestellte Copolymere sind.

**11.** Überzugsmittel oder Verfahren nach einem der Ansprüche 1 bis 10, dadurch gekennzeichnet, daß die Überzugsmittel

A) 10 bis 70 Gew.-%, bezogen auf das Gesamtgewicht der Überzugsmittel, carboxylgruppenhaltiges Bindemittel A,

B) 10 bis 50 Gew.-%, bezogen auf das Gesamtgewicht der Überzugsmittel, epoxidgruppenhaltiges Vernetzungsmittel B,

C) 20 bis 50 Gew.-%, bezogen auf das Gesamtgewicht der überzugsmittel, eines oder mehrerer organischer Lösungsmittel und
D) 0 bis 60 Gew. -%, bezogen auf das Gesamtgewicht der Überzugsmittel, Pigmente und Füllstoffe und
E) 0 bis 10 Gew.-%, bezogen auf das Gesamtgewicht der Überzugsmittel, übliche Hilfs- und Zusatzstoffe
enthalten.

**12.** Verwendung der Überzugsmittel nach einem der Ansprüche 1 und 3 bis 11 für die Autoreparaturlackierung.

**13.** Verwendung der Überzugsmittel nach einem der Ansprüche 1 und 3 bis 11 für die Automobilserienlackierung.

## Claims

**1.** Coating agent containing
A) one or more copolymers containing carboxyl groups and/or one or more polyesters containing carboxyl groups and having a number-average molecular weight $M_n$ of 500 to 8000 and an acid number of 15 to 200 mg of KOH/g as the essential binder component and
B) one or more compounds containing epoxide groups as crosslinking agents,
characterized in that the compound B containing epoxide groups is a copolymer containing epoxide groups, has a number-average molecular weight $M_n$ of 300 to 5000, preferably 500 to 3500, and a heterogeneity ($M_w/M_n$), measured by gel permeation chromatography, of $\leqq 3$, preferably of $\leqq 2$, and has been prepared by continuous bulk polymerization at temperatures between 130 and 350°C and pressures above 1 bar of
a) 10 to 60% by weight, preferably 15 to 50% by weight, of one or more vinylaromatic hydrocarbons,
b) 10 to 50% by weight, preferably 15 to 30% by weight, of one or more ethylenically unsaturated monomers containing at least one epoxide group per molecule and
c) 5 to 80% by weight, preferably 20 to 50% by weight, of other ethylenically unsaturated copolymerizable monomers,
the sum of the weight contents of components a to c in each case being 100% by weight.

**2.** Process for the preparation of a coating agent containing
A) one or more copolymers containing carboxyl groups and/or one or more polyesters containing carboxyl groups and having a number-average molecular weight $M_n$ of 500 to 8000 and an acid number of 15 to 200 mg of KOH/g as the essential binder component and
B) one or more compounds containing epoxide groups as the crosslinking agent,
in which the binder component A and the crosslinking agent B are mixed only shortly before application of the coating agent, characterized in that the compound B containing epoxide groups is a copolymer which contains epoxide groups, has a number-average molecular weight $M_n$ of 300 to 5000, preferably 500 to 3500, and a heterogeneity ($M_w/M_n$), measured by gel permeation chromatography, of $\leqq 3$, preferably $\leqq 2$, and has been prepared by continuous bulk polymerization at temperatures between 130 and 350°C and pressures above 1 bar of
a) 10 to 60% by weight, preferably 15 to 50% by weight, of one or more vinylaromatic hydrocarbons,
b) 10 to 50% by weight, preferably 15 to 30% by weight, of one or more ethylenically unsaturated monomers containing at least one epoxide group per molecule and
c) 5 to 80% by weight, preferably 20 to 50% by weight, of other ethylenically unsaturated copolymerizable monomers,
the sum of the weight contents of components a to c in each case being 100% by weight.

**3.** Coating agent or process according to Claim 1 or 2, characterized in that the copolymer B containing epoxide groups has been prepared using glycidyl methacrylate as one of the ethylenically unsaturated monomers.

**4.** Coating agent or process according to any one of Claims 1 to 3, characterized in that the copolymer B containing epoxide groups has been prepared using alkyl esters of acrylic and/or methacrylic acid as one

of the ethylenically unsaturated monomers.

**5.** Coating agent or process according to any one of Claims 1 to 4, characterized in that the copolymer B containing epoxide groups has an epoxide equivalent weight of 150 to 2000, preferably 500 to 1000.

**6.** Coating agent or process according to any one of Claims 1 to 5, characterized in that the polymers which contain carboxyl groups and are employed as the binders A have an acid number of 30 to 120 mg of KOH/g.

**7.** Coating agent or process according to any one of Claims 1 to 6, characterized in that the polymers which contain carboxyl groups and are employed as the binders A have an amine number of 0 to 50 mg of KOH/g, preferably 10 to 40 mg of KOH/g.

**8.** Coating agent or process according to any one of Claims 1 to 7, characterized in that the polymers which contain carboxyl groups and are employed as the binders A have been prepared by a procedure in which a polymer containing hydroxyl groups and having an OH number of 30 to 200 mg of KOH/g has first been prepared and has then been reacted with carboxylic acid anhydrides to give the corresponding polymers containing carboxyl groups.

**9.** Coating agent or process according to any one of Claims 1 to 8, characterized in that the polymers which contain carboxyl groups and are employed as the binders A have likewise been prepared by continuous bulk polymerization at temperatures between 130 and 350°C and pressures above 1 bar.

**10.** Coating agent or process according to any one of Claims 1 to 8, characterized in that the polymers which contain carboxyl groups and are employed as the binders A are copolymers prepared by free radical solution polymerization.

**11.** Coating agent or process according to any one of Claims 1 to 10, characterized in that the coating agent contains

A) 10 to 70% by weight, based on the total weight of the coating agent, of binder A containing carboxyl groups,

B) 10 to 50% by weight, based on the total weight of the coating agent, of crosslinking agent B containing epoxide groups,

C) 20 to 50% by weight, based on the total weight of the coating agent, of one or more organic solvents and

D) 0 to 60% by weight, based on the total weight of the coating agent, of pigments and fillers and

E) 0 to 10% by weight, based on the total weight of the coating agent, of customary auxiliaries and additives.

**12.** Use of a coating agent according to any one of Claims 1 and 3 to 11 for automobile repair refinishing.

**13.** Use of a coating agent according to any one of Claims 1 and 3 to 11 for automobile series painting.

## Revendications

**1.** Agent de revêtement contenant :

A) un ou plusieurs copolymères, contenant des radicaux carboxyle, et/ou un ou plusieurs polyesters, contenant des radicaux carboxyle, avec un poids moléculaire moyen en nombre $M_n$ de 500 à 8000 et une teneur en acide de 15 à 200 mg KOH/g, comme composant liant principal, et

B) un ou plusieurs composés, contenant des radicaux époxyde, comme agent de réticulation, caractérisé en ce que le composé B, contenant les radicaux époxyde, est un copolymère, contenant des radicaux époxyde, qui montre un poids moléculaire moyen en nombre $M_n$ de 300 à 5000, de préférence 500 à 3500 et une non-uniformité mesurée par chromatographie par perméation sur gel ($M_w/M_n$) $\leqq 3$, de préférence $\leqq 2$, et est préparé par polymérisation en masse continue, à des températures entre 130 et 350°C et des pressions au-dessus de 1 bar, de :

a) 10 à 60% en poids, de préférence 15 à 50% en poids, d'un ou plusieurs hydrocarbures vinylaromatiques;

b) 10 à 50% en poids, de préférence 15 à 30% en poids, d'un ou plusieurs monomères éthyléniquement insaturés avec au moins un radical époxyde par molécule, et

c) 5 à 80% en poids, de préférence 20 à 50% en poids, d'autres monomères copolymérisables éthyléniquement insaturés,

où la somme des poids partiels des composants a à c s'élève à 100% en poids.

2. Procédé de préparation d'agents de revêtement, contenant :

A) un ou plusieurs copolymères, contenant des radicaux carboxyle, et/ou un ou plusieurs polyesters, contenant des radicaux carboxyle, avec un poids moléculaire moyen en nombre $M_n$ de 500 à 8000 et une teneur en acide de 15 à 200 mg KOH/g, comme composant liant principal, et

B) un ou plusieurs composés, contenant des radicaux époxyde, comme agent de réticulation, pour lequel le composant liant A et l'agent de réticulation B sont mélangés juste avant l'application de l'agent de revêtement, caractérisé en ce que le composé B, contenant les radicaux époxyde, est un copolymère, contenant des radicaux époxyde, qui montre un poids moléculaire moyen en nombre $M_n$ de 300 à 5000, de préférence 500 à 3500 et une non-uniformité mesurée par chromatographie par perméation sur gel $(M_w/M_n) \leqq 3$, de préférence $\leqq 2$, et est préparé par polymérisation en masse continue, à des températures entre 130 et 350°C et des pressions au-dessus de 1 bar, de :

a) 10 à 60% en poids, de préférence 15 à 50% en poids, d'un ou plusieurs hydrocarbures vinylaromatiques;

b) 10 à 50% en poids, de préférence 15 à 30% en poids, d'un ou de plusieurs monomères éthyléniquement insaturés avec au moins un radical époxyde par molécule, et

c) 5 à 80% en poids, de préférence 20 à 50% en poids, d'autres monomères copolymérisables éthyléniquement insaturés,

où la somme des poids partiels des composants a à c s'élève à 100% en poids.

3. Agent de revêtement ou procédé suivant la revendication 1 ou 2, caractérisé en ce que le copolymère B, contenant des radicaux époxyde, est préparé par utilisation de méthacrylate de glycidyle comme un des monomères éthyléniquement insaturés.

4. Agent de revêtement ou procédé suivant l'une quelconque des revendications 1 à 3, caractérisé en ce que le copolymère B, contenant des radicaux époxyde, est préparé par utilisation d'esters alcoyliques des acides acrylique et/ou méthacrylique comme un des monomères éthyléniquement insaturés.

5. Agent de revêtement ou procédé suivant l'une quelconque des revendications 1 à 4, caractérisé en ce que le copolymère B, contenant des radicaux époxyde, montre un poids équivalent d'époxyde de 150 à 2000, de préférence 500 à 1000.

6. Agent de revêtement ou procédé suivant l'une quelconque des revendications 1 à 5, caractérisé en ce que les polymères, contenant des radicaux carboxyle, utilisés comme composant liant A montrent une teneur en acide de 30 à 120 mg KOH/g.

7. Agent de revêtement ou procédé suivant l'une quelconque des revendications 1 à 6, caractérisé en ce que les polymères, contenant des radicaux carboxyle, utilisés comme composant liant A montrent une teneur en amine de 0 à 50 mg KOH/g, de préférence 10 à 40 mg KOH/g.

8. Agent de revêtement ou procédé suivant l'une quelconque des revendications 1 à 7, caractérisé en ce que les polymères, contenant des radicaux carboxyle, utilisés comme composant liant A sont préparés d'abord par obtention d'un polymère, contenant des radicaux hydroxyle, avec une teneur OH de 30 à 200 mg KOH/g, et ensuite en le transformant en polymères correspondants, contenant des radicaux carboxyle, avec des anhydrides d'acides carboxyliques.

9. Agent de revêtement ou procédé suivant l'une quelconque des revendications 1 à 8, caractérisé en ce que les polymères, contenant des radicaux carboxyle, utilisés comme composant liant A sont préparés par polymérisation en masse continue à des températures entre 130 et 350°C et des pressions au-dessus de 1 bar.

10. Agent de revêtement ou procédé suivant l'une quelconque des revendications 1 à 8, caractérisé en ce que les polymères, contenant des radicaux carboxyle, utilisés comme composant liant A sont des copolymères préparés par polymérisation radicalaire en solution.

11. Agent de revêtement ou procédé suivant l'une quelconque des revendications 1 à 10, caractérisé en ce

que l'agent de revêtement contient :

A) 10 à 70% en poids, par rapport au poids total de l'agent de revêtement, de liant A contenant des radicaux carboxyle;

B) 10 à 50% en poids, par rapport au poids total de l'agent de revêtement, d'agent de réticulation B contenant des radicaux époxyde;

C) 20 à 50% en poids, par rapport au poids total de l'agent de revêtement, d'un ou plusieurs solvants organiques, et

D) 0 à 60% en poids, par rapport au poids total de l'agent de revêtement, de pigments et de charges, et

E) 0 à 10% en poids, par rapport au poids total de l'agent de revêtement, d'adjuvants ou de produits d'addition.

**12.** Utilisation de l'agent de revêtement suivant l'une quelconque des revendications 1 et 3 jusqu'à 11, pour le laquage de dépannage des automobiles.

**13.** Utilisation de l'agent de revêtement suivant l'une quelconque des revendications 1 et 3 jusqu'à 11, pour le laquage en série des automobiles.